# EUROPEAN PATENT APPLICATION

(11) **EP 2 119 351 A2**
(43) Date of publication of application: **18.11.2009**
(21) Application number: 09160354.8
(22) Date of filing: 15.05.2009
(51) Int. Cl.: A01M 29/00

(54) **Electronic pest deterrent device**

(30) Priority: 16.05.2008 DK 200800687
(71) Applicant: ENVI-CON ApS, 6000 Kolding (DK)
(72) Inventor: Thiim, Christian, 7400 Herning (DK); Knudsen, Hans, 6000 Kolding (DK)
(74) Representative: Tellefsen, Jens J.

(57) **Abstract**

Electronic pest deterrent device (10) particularly for deterring rodents from moving freely in pipe (4) systems, where the device is suitable to be inserted into the pipe system such as a sewer, where the pipe defines an upper pipe section and a lower pipe section, where the device comprises a shield (11), from which shield a plurality of substantially parallel electrical leads (6) are suspended, where the shield has a shape, corresponding in shape and size to the upper part of the pipe, and in use the shield is mounted against the upper part of a pipe, whereby the leads extend substantially vertically down from the shield, into close proximity with the bottom of the pipe and that the leads are connected to a source of energy, where adjacent leads are connected to opposite electrical poles of the energy source.

## Description

### Field of the Invention

The present invention relates to an electronic pest deterrent device as well as a method for using such a device.

### Background of the Invention

It is a well recognized and an increasing problem with pests and in particular rodents such as rats and mice inhibiting structures immediately adjacent our living areas which for most people is not very welcome and also for some people gives rise to anxieties. In addition to this rodents are associated with the spread of diseases and generally taken as an indicator for hygienic problems.

Therefore, at number of devices has been developed in order to hinder the pests, in particular rats and mice, in settling in our domestic sewer systems in order to remove the pests from our living quarters and in order to limit their living areas.

Such prior art devices include mechanical blocks where one, two or more baffle plates are arranged in the pipe system allowing liquids and more or less solid items suspended in the liquid to pass in one direction, but hinder the rodents in moving in the opposite direction. As the flow of liquid is usually away from our living areas in the sewer systems, these pest deterrent devices have been relatively successful in hindering the pests in passing the baffle plates but on the other hand in some instances have caused solid subjects in the liquid to be hampered in their transport with the liquid causing the items and thereby also the liquid to stow, whereby the free flow of the liquids in the sewers has been hampered, causing problems to the users.

Other examples of pest deterrent devices are devices with spears and sensors such that as a rodent such as a rat passes and activates the sensor the spears will be rapidly lowered penetrating the rodent and thereby killing the rodent. Also as was the case for the deterrent device including the baffle plates causing obstruction to the normal liquid flow, the dead rodent will also at most liquid levels be an obstacle in the sewer system and will require substantial amounts of liquids in order to be flushed away. This in turn, until the relatively large amounts of liquid are passed through the sewer system, may cause inconveniencies to the users.

In addition to these devices, other devices incorporating sound/noise, lasers and the like, have been tested, and furthermore the use of poison dispensed in areas where the pests are active has also been attempted. Particularly with the poisons the rodents and in particular rats have an ability to adapt, such that the poisons within a very short time span have become ineffective in eradicating the pests whereby new poisons continually have to be developed or very severe/concentrated poisons are to be used which poisons may cause other undesirable effects when they are let loose in our environment.

### Object of the Invention

Therefore, there is a need for a pest deterrent which is effective, does not influence the flow of liquid in the pipe systems and which is relatively affordable to install, maintain and operate such that widespread use of the device/method may find use.

### Description of the Invention

The invention consequently addresses this by providing an electronic pest deterrent device particularly for deterring rodents from moving freely in pipe systems, where the device is suitable to be inserted into the pipe system such as a sewer, where the pipe defines an upper pipe section and a lower pipe section, where the device comprises a shield, from which shield a plurality of substantially parallel electrical leads are suspended, where the shield has a shape, corresponding in shape and size to the upper part of the pipe, and in use the shield is mounted against the upper part of a pipe, whereby the leads extend substantially vertically down from the shield, into close proximity with the bottom of the pipe and that the leads are connected to a source of energy, where adjacent leads are connected to opposite electrical poles of the energy source.

In this manner the invention provides a number of advantages where some of the most important will be discussed below.

By supplying a device comprising a number of leads in the shape of electrical conductive wire pieces, the obstruction to the liquid flow will be negligent. Therefore, by installing an electronic pest deterring device according to the present invention the liquid flow in the pipe system will not be hampered due to the device. Furthermore, the shield will be shaped in such a manner that it will closely fit inside the pipe system and therefore no additional constructional work needs to be undertaken in connection with the pipe system, but the device according to the invention may be retrofitted very easily. For most cross-sectional shapes of pipe systems and in particular round or oval shapes the shield will have a corresponding shape such that when installing the shield and thereby the device, the shield will be fitting very closely with the inner surface of the pipe. In some instances it may be necessary to mechanically fasten the shield construction to the inner side of the pipe, but most often the shield will be able to be mechanically held due to the mutual shapes of the inner pipe surface and the outer surface and extend of the shield.

The electrical leads will typically be in the shape of a non-corroding metal wire such as for example a copper wire or the like and by connecting every other wire to plus on the energy source and every other wire to minus, adjacent wires will be connected to opposite electrical poles on the energy source. Therefore, when a conductive member such as the head of a rodent is pushed in between two adjacent leads, the conductive characteristics of the animal/pest will cause the system to short circuit whereby an electrical current passes through the pest. The pest will experience this as very unpleasant and will withdraw in the direction from which it came. In this manner an effective barrier has been placed in the pipe system without interfering with the normal workings of the pipe system.

Test with the system have furthermore indicated that the tactile hairs on the nose portion of for example rats will pick up the current and thereby the inherent danger to the rat such that without harming the animal it will detect that here is a barrier which is not to be passed. Rats are furthermore very clever and will try to circumvent the device, but when failing to do so will give up and find other areas to live. In this manner the barrier created by the inventive device according to the invention, will be effective in avoiding the spread of pests through pipe systems.

The length of the leads is also very important in that they must be adapted to the pipe system in which the device is to be arranged. In some pipe systems there is a more or less constant liquid flow through the pipe system, such that the leads may be designed to have a length terminating immediately above the surface of the liquid whereby short-circuiting due to conductive properties of the liquid will be avoided. In other instances liquid may only be present in the pipe system very seldom or at intervals whereby it is necessary in order to provide an efficient barrier to provide leads which extend almost to the bottom of the pipe system, such that pests are not able to crawl under the leads.

In a further advantageous embodiment of the invention the leads are pivotally mounted to the shield, such that all the leads may pivot in the same direction. In this particular embodiment it is foreseen that objects floating in the liquid will be able to pass the device without being held by the suspended leads. Typically, the mounting of the leads to the shield will allow the leads to pivot with the flow of liquid in the pipe. Should any objects be carried by the liquid, the leads will in this manner pivot out of the way and thereby allow both liquid and particles/objects to pass the device unhindered.

In a further advantageous embodiment of the invention a sensor is arranged proximate the leads, where said sensor is directed at detecting pests approaching the device. The sensor may in a further advantageous embodiment be connected to the energy source, such that as a pest is detected by the sensor, the energy source is activated, and when no pest is detected the energy source is disconnected. In this manner the sensor will detect the pests in the vicinity of the device and thereby energize the device such that as the pest approaches or gets into contact with the device, the energy surge will deter the pest from further advancement.

This embodiment is particularly useful in pipelines where various liquids may be transported or where the level of the liquid in the pipe may vary considerably. The liquids may contain conductive substances such that the presence of liquid in contact with two adjacent leads will short-circuit the system and thereby release the electrical energy which should otherwise have been used to deter the pests. By only activating when there is a pest in the vicinity detected by the sensor the risk of inadvertently discharging the electrical system is minimized.

By only energising the system when a rodent/pest is detected, energy is saved, such that in embodiments where the energy source is a battery, the effective operational lifespan of the battery is prolonged.

Furthermore, the information from the sensor may be used for other purposes such as for example to monitor pest activity, pest population size, etc.

In a further advantageous embodiment the electrical leads extend downwards to a level slightly above the normal surface level of the fluids in the pipe. This has already been explained above and is particularly used for pipes where the liquid level is more or less constant.

In a still further advantageous embodiment of the invention the shield is made from a plastic material where each electrical lead is pivotably mounted in the shield, where a pivot mechanism is provided for each lead, which mechanism comprises a pivot axle, and where a conductive member is arranged adjacent to the axle, such that as the lead pivots, the lead is brought into or out of electrical contact with the conductive member, and that each conductive member is connected to an electrical pole on the energy source.

The construction of the device shall be such that it is able to withstand the very severe environmental conditions in a sewer, such that during the design of the device it is important to take into account the very aggressive environment when selecting materials. This aspect is further emphasized in a further embodiment of the invention, where the pivot mechanism, the axle, the conductive member, and at least a part of the lead is arranged in a sealed housing arranged in the shield, either as a separate component or as an integrated part of the shield.

The pivoting action in this embodiment is opposite to the pivotal action mentioned above. With the embodiment discussed above pivotal movement was facilitated in order to allow objects floating in the liquid to pass. In the present embodiment, it is foreseen that the rodent, trying to pass the barrier will engage and pivot the leads, whereby the contact is closed, sending an electrical current through the leads. Naturally both pivotal movements may be combined in any one device according to the invention.

By arranging all these important components in a sealed housing it can be ensured that the environment as such will have no influence on the proper workings of the more fragile parts of the device such that the device will remain in a working order for very long periods of time thereby having a long life expectancy as the environment has already been taken into account when constructing the device. In a still further advantageous embodiment of the invention the lateral distance between two adjacent electrical leads perpendicular to the liquid flow direction in the pipe is between 5 mm and 30 mm, more preferred between 8 mm and 25 mm, and most preferred between 10 mm and 15 mm.

This embodiment foresees to take into account the size of the pests predominantly mice and rats such that by spacing the electrical leads at these intervals it will be possible for the pests to detect the leads by their tactile hairs which are very sensitive. This in turn reduces the power requirements of the leads in that as the pests detect the electrical charge, this will deter them from further advancement in the pipe system.

In a still further advantageous embodiment the energy source is a battery where optionally means for wirelessly communicating information relating to the device is provided, where the information is selected from the following list: status of battery, status of device, number of events where the leads have been energized, device identification code etc.

The wireless communication means makes it possible to register how many activations or how great the pest activity is around the pest deterring device, such that additional measures may be taken in order to effectively eliminate the pests at that particular location. Furthermore, when using an energy source in the shape of a battery the device may very easily be installed in that no extra installation work is required simply fitting a holder for a battery, for example in a manhole, and thereafter fitting the device into one or more of the pipe openings being accessible from the manhole is all that is required in order to install the electronic pest deterrent device according to the present invention.
Needless to say it is naturally also possible to establish communication by wires. Immediately adjacent some sewer systems other utilities are present, such as for example phone or electrical installations, whereby it becomes relatively simple to hook into these networks.

In a still further advantageous embodiment the energy source comprises means for accumulating and executing a power surge, for example in the shape of a capacitor, where the energy source thereby provides voltage differential in the leads of at least 2 kV, more preferred 3 kV or still more preferred more than 4 kV.

In instances where the charge is detected by the tactile hairs of the pest, the current will only create a mild shock for the pest. However, in cases where the pest comes into contact with the leads, it is in some instances desirable to be able to exterminate the pests, and therefore the lead shall be chargeable up to currents which will effectively execute the pests instantly. For normal deterrent operation the voltage is as described above with a current of 40 to 60 mAmp. If however it is desirable to exterminate the pests, in particular rats and mice, the voltage should be kept in the intervals mentioned above, whereas the current should be increased, up to for example 1 Amp to 10 Amp.
A more correct value for the operational conditions would be to indicate the energy released when the device is triggered. For deterrent purposes 0,3 Joule at 50 Ohms is normal operation parameter, whereas for extermination the energy level is increased to approx. 5 Joule at 50 Ohms. In Denmark this will become the legal energy level from 2010.

The invention is also directed to a method of deterring pests in a pipe system wherein a device as described above is used where electrical leads are suspended vertically with a preset mutual distance across a cross section of a pipe in the pipe system, and where adjacent leads are connected to oppositely charged poles on an energy source, such that at least when a pest approaches the leads, the leads are energized sufficiently to deter the pest from proceeding through the suspended leads.

With this method it is possible to achieve all the advantages discussed above.

### Description of the Drawing

The invention will now be described with reference to the accompanying drawings wherein
- figure 1: schematically illustrates an installation of a pest deterring device in a pipe system;
- figure 2: illustrates a cross section through a pipe in the pipe system;
- figure 3: illustrates a detail of an electrical contact;
- figure 4: illustrates another embodiment of an electrical contact, and
- figure 5: illustrates an electrical diagram for one embodiment.

### Detailed Description of the Invention

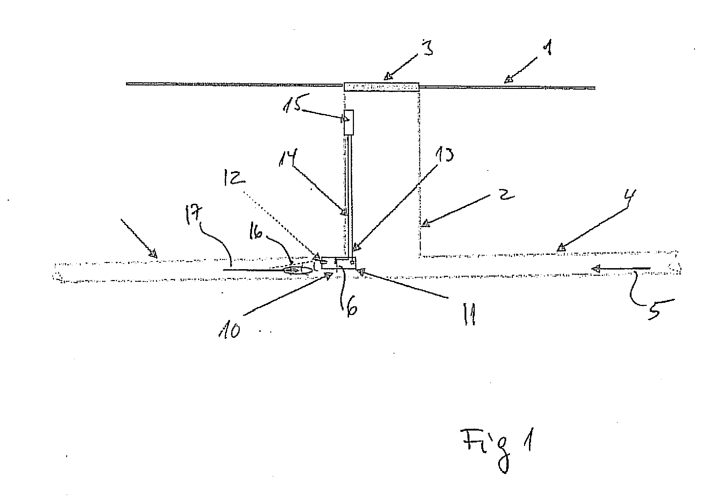

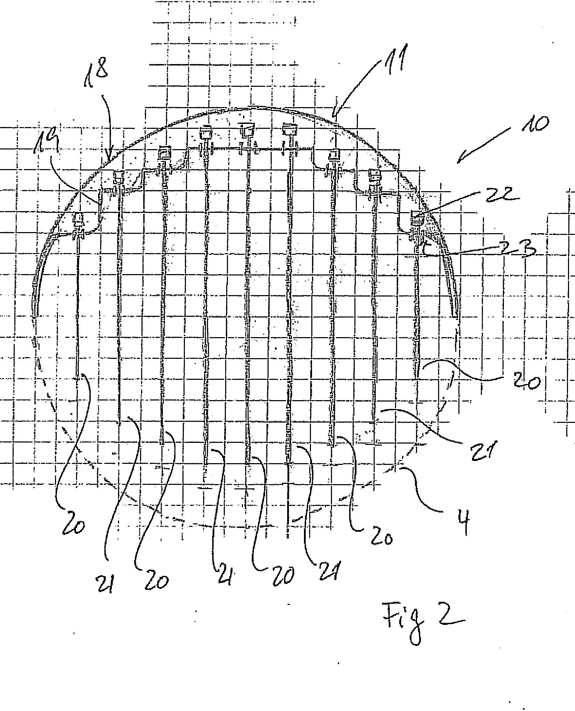

In figure 1 is illustrated a cross section through the soil, where the surface of the soil is indicated by reference number 1. Below the surface 1 a section of a sewer system is indicated where the section comprises a manhole 2 provided with a manhole access opening 3 in the surface 1 whereby it is possible to gain access to the sewer system. Furthermore, a main sewer pipe 4 is indicated, and the liquid flow direction is indicated by the arrow 5. In the pipe 4 is installed a device 10 according to the invention. The device will be explained in more detail with reference to figures 2, 3 and 4. As is evident the device 10 comprises a shield 11, a sensor 12, positive and negative electrical connections 13, 14 leading to an energy source which in this instance is a battery 15.

As a pest in this example, for example a rat 16, moves through the sewer 4 in a direction indicated by the arrow 17, the sensor 12 will identify the rat and energize the device 10. When the device is energized, the electrical leads 6, see figure 2, will be charged from the battery 15 through the electrical wiring 13, 14 such that as the rat 16 touches the lead 6, the rat will experience an electrical shock and be very reluctant to proceed, whereby the rat's access to the sewer system on the right hand side of the device 10 will be denied.

Turning to figure 2 a cross section through a device 10 according to the invention is illustrated. The cross section of the sewer pipe 4 is indicated in dashed lines. The device 10 comprises a shield 11 which shield is shaped to closely fit the shape of the upper part of the sewer pipe 4. In this embodiment the shield 11 has two shells 18, 19 such that the shell 18 will engage the inner surface of the sewer pipe and the outer shell will be exposed to the environment inside the sewer pipe 4.

At regular intervals, leads 6 are suspended vertically and parallel from the shield 11. The leads are connected such that every other lead 20 is connected to the positive pole on the battery and every other lead 21 is connected to the negative pole. Therefore, when charging the leads 20, 21, and electrical field occurs between the leads. As a rodent touches two leads at the same time this will constitute a short circuit of the system, i.e. a short circuit of the leads 20, 21, whereby the pests will experience an electrical shock and thereby rapidly move away from the device 10 according to the invention.

The length of the leads 20, 21 are adapted to the conditions in the sewer pipe. Naturally, the leads 20, 21 shall extend towards the bottom of the pipe sufficiently in order to avoid that pests can escape under the leads without experiencing an electrical shock. In this instance the liquid flow 5 in the sewer pipe 4 is either relatively feeble or only occurs at intervals such that the leads extend substantially all the way towards the bottom of the sewer pipe 4.

In other instances the leads may be adapted to a more or less constant liquid surface such that the leads are terminated just above the surface in order to avoid permanent short circuitry due to conductive properties in the liquid flowing in the sewer pipe.

The leads 20, 21 are pivotably connected in the inner shell 19 and comprise contact means 22, whereby the connection to the energy source 15 may be established. In the embodiment illustrated with reference to figure 1, a sensor 12 was provided in order to detect the approach of a rodent. In other instances as the embodiment illustrated in figure 2 the leads 20, 21 are pivotably mounted by means of an axle illustrated by reference number 23 such that as a rodent touches one of the leads 20, 21, they pivot around the pivot axle 23 whereby the contact 22 is closed such that the leads are energized. This in turn causes the animal to experience an electrical shock, whereby the animal will turn around and not try to force the barrier.

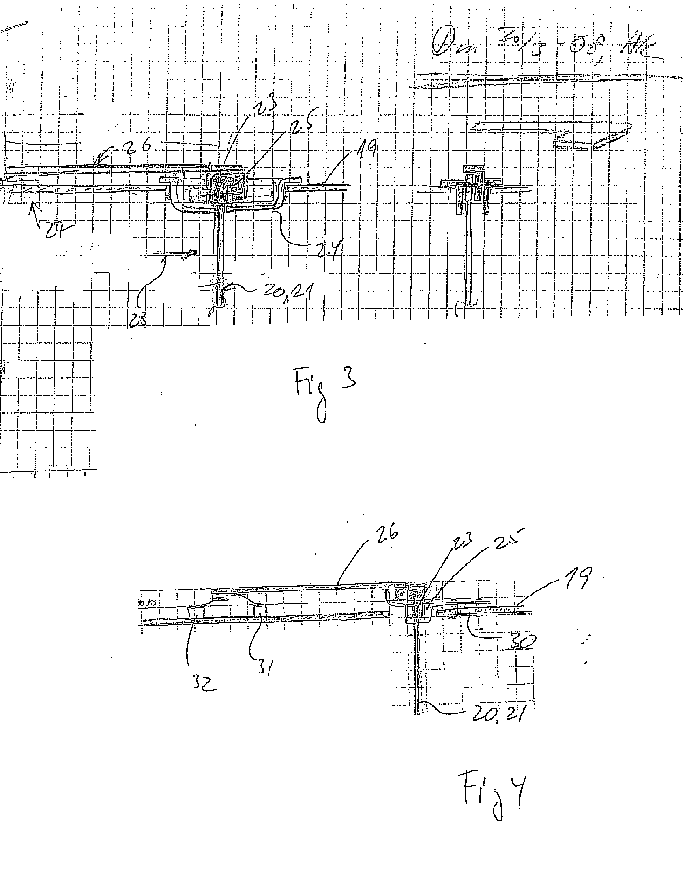

Turning to figure 3 and 4 two examples of pivotable contacts are illustrated.

In figure 3 is illustrated an embodiment where the contact body 24 is mounted in the inner shell 19 of the shield. The lead 20, 21 is mounted in a contact body 25 which is pivotably arranged with a pivot axis 23 through the pivot body 25. The lead 20, 21 is extended substantially perpendicular to the vertical direction in a lever arm 26, and at the terminal end of the lever arm a contact point 27 is arranged which contact point comprises two parts: a part mounted to the lever arm 26, and a part mounted to the inner side of the inner shell 19, such that as the lead 20, 21 is pivoted due to engagement with a rodent in a direction indicated by the arrow 28, the two contact points will come into contact thereby creating conductivity through the lever arm 26 through the lead 20, 21 which in turn will cause an electrical shock for the rodent as the distance between two adjacent leads 20, 21 is such that at least two leads will be pivoted in the direction 28 at the same time thereby creating the short circuit connection.

With reference to figure 4 a similar construction is illustrated where the lead 20, 21 is pivotably mounted around the pivot axis 23 by means of a pivot body 25. The pivot body 25 is in this example fastened by means of a rivet 30 to the inner shell 19 of the shield 10. Contact is established by the terminal end of the lever arm 26 connecting the two contact points 31, 32 whereby the lead 20, 21 is energized.

In this manner two different activation systems are illustrated, a first system with respect to figure 1, wherein a sensor detects a rodent which in turn energizes the leads 20, 21 or a mechanical system where when the rodent engages the leads 20, 21, these pivot thereby establishing an electrical contact which in turn energizes the leads and thereby provides the rodent with an electrical short circuit shock.

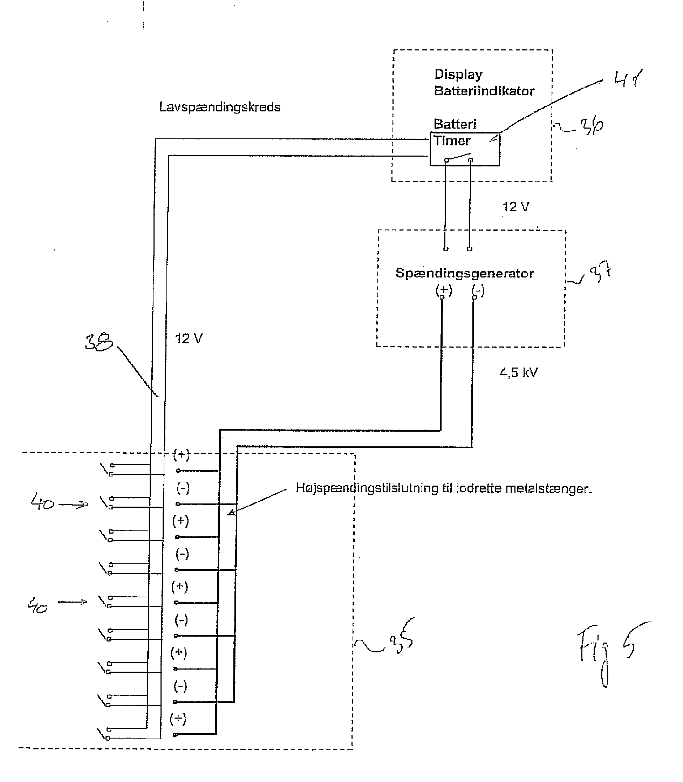

In fig. 5 is illustrated an example of an electrical diagram for a deterrent device being powered by a battery. The part of the device supposed to be fitted in the pipe, comprising the electrical leads and shield, is indicated as a box 35 in dashed lines. The electrical supply system is indicated by the boxes 36, 37, also in dashed lines.

The device comprises two separate circuits 38, 39. A first low voltage circuit 38, which in this example operates at 12 Volts. The switches 40 are provided one for each electrical lead, suspended from the shield (see fig. 2). As a pest moves the lead, the switch 40 is closed. This in turn closes a switch 41 in the control box 36, whereby power is directed to a voltage amplifier 37 which in turn supplies the electrical leads via wires 42, with for example 4,5 kV.

As the pest backs away from the device the switch 40 will open and break the power to the control box 36. The leads will remain powered for the duration of the time set on the timer device, after which time the system will be without power (in a power saving mode).

As illustrated the switch 41 may be supplied with a timer such that the contact remains closed for a period of time.

Although the power supply 36 in this embodiment is a battery, it may naturally be substituted with a permanent connection to a power grid.

The control box 36 (corresponding to ref. 15 in fig. 1) may comprise means for communication to a central monitoring unit or control post, and/or means for counting the number of times the leads are activated as an indicator of the pest activity in the vicinity of the device.

In embodiments where a sensor 12 is deployed as a means for detecting the approaching pest, the sensor replaces the switches 40 in fig. 5

## Claims

1. Electronic pest deterrent device particularly for deterring rodents from moving freely in pipe systems, where the device is suitable to be inserted into the pipe system such as a sewer, where the pipe defines an upper pipe section and a lower pipe section, where the device comprises a shield, from which shield a plurality of substantially parallel electrical leads are suspended, where the shield has a shape, corresponding in shape and size to the upper part of the pipe, and in use the shield is mounted against the upper part of a pipe, whereby the leads extend substantially vertically down from the shield, into close proximity with the bottom of the pipe and that the leads are connected to a source of energy, where adjacent leads are connected to opposite electrical poles of the energy source or where all leads are connected to one electrical pole and the liquid or the bottom of the pipe is grounded.

2. Electronic pest deterrent device according to claim 1 wherein the leads are pivotally mounted to the shield, such that all the leads may pivot in the same direction.

3. Electronic pest deterrent device according to claim 1 wherein a sensor is arranged proximate the leads, where said sensor is directed at detecting pests approaching the device.

4. Electronic pest deterrent device according to claim 3 wherein the sensor is connected to the energy source, such that as a pest is detected by the sensor, the energy source is activated, and when no pest is detected the energy source is disconnected.

5. Electronic pest deterrent device according to claim 1 wherein the electrical leads extend downwards to a level slightly above the normal surface level of liquids in the pipe.

6. Electronic pest deterrent device according to claim 1 wherein the shield is made from a plastic material, and where each electrical lead is pivotably mounted in the shield, where a pivot mechanism is provided for each lead, which mechanism comprises a pivot axle, and where a conductive member is arranged adjacent to the axle, such that as the lead pivots, the lead is brought into or out of electrical contact with the conductive member, and that each conductive member is connected to an electrical pole on the energy source.

7. Electronic pest deterrent device according to claim 6 wherein the pivot mechanism, the axle, the conductive member, and at least a part of the lead is arranged in a sealed housing arranged in the shield, either as a separate component or as an integrated part of the shield.

8. Electronic pest deterrent device according to claim 1 wherein the lateral distance between two adjacent electrical leads perpendicular to the liquid flow direction in the pipe is between 5 mm and 30 mm, more preferred between 8 mm and 25 mm, and most preferred between 10 mm and 15 mm.

9. Electronic pest deterrent device according to claim 1 wherein the energy source is a battery, and where optionally means for wirelessly communicating information relating to the device is provided, where the information is selected from the following list: status of battery, status of device, number of events where the leads have been energized, device identification code.

10. Electronic pest deterrent device according to claim 1 wherein the energy source comprises means for accumulating and executing a power surge, for example in the shape of a capacitor, where the energy source thereby provides current differential in the leads of at least 2 kV, more preferred 3 kV or still more preferred more than 4 kV.

11. Method of deterring pests in a pipe system, wherein a device according to any of claims 1 to 10 is used, where electrical leads are suspended vertically with a preset mutual distance across a cross section of a pipe in the pipe system, and where adjacent leads are connected to oppositely charged poles on an energy source, such that at least when a pest approaches the leads, the leads are energized sufficiently to deter the pest from proceeding through the suspended leads.
